# EUROPEAN PATENT APPLICATION

(11) **EP 0 589 498 A1**
(43) Date of publication of application: **30.03.1994**
(21) Application number: 93202334.4
(22) Date of filing: 09.08.1993
(51) Int. Cl.: G06K 11/16, G06F 3/033

(54) **Electronic circuitry rendered immune to EM noise of display**

(30) Priority: 12.08.1992 EP 92202484
(71) Applicant: Philips Electronics N.V., 5621 BA Eindhoven (NL)
(72) Inventor: Makinwa, Kofi Afolabi Anthony, NL-5656 AA Eindhoven (NL); Koolen, Gerardus Johannes Karel Marijke, NL-5656 AA Eindhoven (NL)
(74) Representative: Strijland, Wilfred

(57) **Abstract**

An electronic apparatus, e.g., a touch tablet or a graphical tablet, comprises a display means, e.g., an LCD, with a device that generates electro-magnetic noise during a particular time interval. The repetitive row inversion operation of the LCD generates electro-magnetic noise. The apparatus includes a data processing electronic circuit for functional collaboration with the display means. The apparatus further has protection means coupled to the circuit for reducing a susceptibility of the circuit to the electro-magnetic noise. The protection means comprises disabling means for at least partially disabling the circuit in the particular time interval.

## Description

### FIELD OF THE INVENTION

The invention relates to an electronic apparatus comprising a display means with a device that generates electro-magnetic noise during a particular time interval; a data processing electronic circuit for functional collaboration with the display means; and protection means coupled to the circuit for reducing a susceptibility of the circuit to the electro-magnetic noise.

### BACKGROUND ART

An example of such an apparatus is a graphical data input device, wherein the electronic circuit includes a data processing portion of a digitizer.

### Digitizers

A digitizer is a tool for entering data into a data processing system by way of manipulating an object, such as a finger or a stylus, relative to the digitizer. Examples of such a digitizer include graphical tablets and touch screens.

For instance, an inductive graphical tablet interacts with a stylus that generates an electromagnetic field to be picked up by conductive loops in the tablet, thereby determining the position of the stylus relative to the tablet. This position then is representative of specified data entered into the data processing system. Another example is a capacitive touch screen comprising a resistive layer driven by a high-frequency signal. The touch position is derived from measuring the ratios of currents flowing into various directions through the resistive layer, the ratios being indicative of the location of the capacitance of the user's finger to ground.

Another type of digitizer is a touch screen, whose operation is based on measuring forces and moments of forces when experiencing a contact with the user's finger. Strain gauges may be used to convert mechanical tensions into electrical signals that in specified combinations are indicative of the location of the contact relative to the screen.

Generally, the digitizer senses the presence of the manipulated object, whereupon an analog electrical signal is created that is supplied to a microprocessor upon being amplified and digitized. The microprocessor processes the digitized signal in order to determine the object's position relative to the digitizer.

### Display units

Particular types of displays, such as LCDs and CRTs, include circuitry that generates electro-magnetic (EM) noise during operation. The EM noise may affect other electronic or electro-magnetic devices, especially high-speed circuits, in the vicinity of the display. High-speed circuits are more susceptible to environmental influences than low-speed circuitry, for instance, owing to smaller node capacitances and lower signal voltages. Clearly, it is undesirable that the noise puts a limit to the performance of ambient circuitry.

The EM noise produced by an LCD stems mainly from periodically reversing the polarity of the LCD's drive signals to prevent the crystals from being damaged. The reversing is accompanied by a large voltage swing that is capacitively coupled to ambient circuitry, where it appears as a spike. Also, since an LCD is an array of capacitors, the drive signal inversion results in a brief surge of current when the capacitors are discharged and then charged to the opposite polarity. The current surge is coupled inductively to ambient circuitry, again producing a spike. Typically the drive signal has a frequency of a few hundred Hertz.

In a CRT, the flyback pulse occurs when the electron ray is swept across the screen to start a new pixel line. The sudden voltage change in the controlling sawtooth voltage is capacitively or inductively coupled to the electronic circuitry in the environment, where it generates a spike. The flyback pulse has a typical frequency of the order of 15kHz.

### Background Art

One solution to the noise interfering with the circuit's operation would be to decrease system bandwidth (filtering) to the point, where the effects of interference are no longer significant. However, this constitutes a limiting factor regarding processing speed.

European Patent Application EP-A 0 464 205 discloses an alternative manner to reduce the undesired noise effects in an example of a coordinate input device. The device comprises a tablet with a plurality of loop coils, a host computer and an LCD. A particular loop coil transmits an electric wave of predetermined frequency to excite a tuner circuit in an input indicator (stylus). The tuner circuit thereupon transmits an electric wave to the particular loop coil that has stopped transmitting. Sequential switching of the plurality of loop coils admits of detecting the position of the indicator relative to the tablet. The coordinate values of this position are delivered to the host computer. The host computer produces a video signal and a corresponding synchronizing (sync) signal that is based on, among other things, the coordinate values. The host computer delivers the video signal and the sync signal to the LCD. The LCD creates vanous control signals based on the sync signal and displays the data of one line in the video signal in response to a data latch pulse among the control signals.

The LCD is overlaid on the position detecting tablet. The tablet and the LCD collaborate in such a way that the display latch pulse is made to occur when the tablet is transmitting the electric wave. Accordingly, the noise caused in synchronism with the data latch pulse will not occur during the reception period of the electric wave in the tablet. Mixing of the noise with the received wave will not occur so that the detection accuracy is not aggravated.

### OBJECT OF THE INVENTION

The operation of the prior art device employs mutual synchronization of the LCD and the tablet, which is based on the facts that transmission and reception in this particular tablet are actions well separated in time, and that LCD and tablet are made to operate synchronously. Diminishing of the noise effects in the prior art therefore is only possible due to the specific operation of the particular tablet used.

The invention aims at, among other things, providing an electronic apparatus of the kind mentioned in the preamble, wherein the undesired effects of the EM noise are reduced in a fashion that is applicable to general types of apparatus, independent of the functionality of the apparatus or of the circuit. It is another object to provide such an apparatus, whose operation is protected against noise interference to a considerably wider extent than that of the apparatus in the prior art.

### SUMMARY OF THE INVENTION

To this end, the invention provides an electronic apparatus comprising a display means with a device that generates electro-magnetic noise during a particular time interval and a data processing electronic circuit for functional collaboration with the display means. The apparatus further includes protection means coupled to the circuit for reducing a susceptibility of the circuit to the electromagnetic noise. In accordance with the invention, the protection means comprises disabling means for at least partially disabling the circuit in the particular time interval.

The invention allows increasing the amount of interference rejection with regard to the prior art, simply by means of a conditional or a fixed alternate time slot allocation to prevent the effects of the EM noise from entering the electronic circuit. In contrast with the invention, the apparatus in the cited prior art safeguards only the reception of the signal from the stylus in the tablet, signal processing circuits in the tablet still being exposed to the generated noise. In addition, noise protection according to the invention can be applied to a plurality of processing circuits in the apparatus, whereas the prior art focuses on the circuitry involved in reception of the signal by the tablet by means of rigidly tying the moment of transmission by the tablet to the occurrence of the LCD latch pulse.

The protection means' operation may be based on anticipating a state of the device of the display, wherein the device is going to transmit EM noise of a kind that may interfere with the electronic circuit's operation. The electronic circuit is conditionally temporarily disabled, that is, it is rendered insusceptible to the EM noise by putting its signal processing on hold when this state is detected. For, e.g., an LCD the protection means may be controlled by the drive signal generator to precede the periodic reversing of the polarity of the drive voltage. For a CRT, the electronic circuit is disabled during the flyback pulse, the protection means being coupled to the control voltage generator for the electron beam.

Instead of an anticipatory operation, the protection means may control the electronic circuit and the display on the basis of a fixed time-slot allocation. The protection means may comprise a single control signal generator, e.g., a clock signal generator, being coupled to both the display's device and the electronic circuit. Opposite phases of the control signal may then be used to complementarily control the electronic circuit and the display to be operative in non-overlapping time intervals.

Noise rejection according to the invention is considerably advantageous in the field of data input devices that involve a fair amount of data processing. In this technical field, progression focuses on smaller dimensions, a higher degree of physical and functional integration of parts and on multiple functionalities. Other electronic apparatuses may as well benefit considerably from the suggested approach, such as measuring devices provided with an LCD, e.g., for display of the measured quantities (electrical currents, voltages, temperature, etc.), video game equipment hand-held or stationary, or any other electronic apparatus wherein electronic circuitry may be affected by the presence of a display.

Even more generally, the invention may combine a first electronic circuit furnishing an output signal on a fast time scale and a second electronic circuit that provides an output signal on a slow time scale, the second circuit generating EM noise at predictable moments that adversely affects the operation of the first circuit. The first circuit's operation then may be temporarily put on hold in a controllable manner when the second circuit produces the noise.

### BRIEF DESCRIPTION OF THE DRAWING

The invention is explained in more detail and by way of example with reference to the accompanying drawing, wherein:
Figure 1 shows a first example of a data input apparatus of the invention using the disabling/enabling approach;
Figures 2 and 3 illustrate time-relationships between inversion and control signals, and spike noise for the apparatus of Figure 1 that includes an LCD;
Figure 4 illustrates a frequency-relationship for a data input apparatus based on modulation techniques; and
Figure 5 gives a second example of a data input apparatus using the modulation approach.

### DETAILED DESCRIPTION OF THE EMBODIMENT

### Disabling/enabling approach

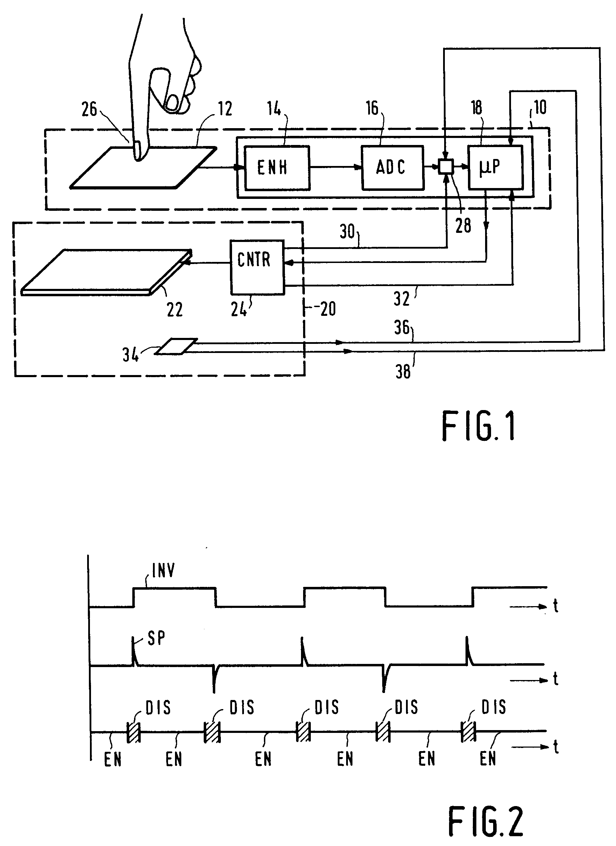

Figure 1 shows a block diagram for an example of a data input apparatus in the invention. The apparatus comprises a digitizer 10 and a display unit 20. Digitizer 10 includes a sensor 12, a signal enhancing circuit 14 coupled to sensor 12, an analog/digital converter (ADC) 16 coupled to circuit 14, and a microprocessor 18 coupled to ADC 16. Display unit 20 may comprise an LCD 22 or, alternatively, a CRT 22, and display control circuit 24.

Sensor 12 provides an output signal in response to an object 26 manipulated by the user to enter data into digitizer 10. Here, sensor 12 functions as a touch screen activated by the user's finger 26. Sensor 12 generates an electrical output signal related to the actual position of the manipulated object relative to sensor 12. Since the signal is a voltage or a current in a conductor, it is susceptible to electromagnetic noise produced by display unit 20. Sensor 12 may comprise a strain gauge detection means, capacitive detection means, inductive detection means, optical detection means, etc.

Signal enhancing circuit 14 converts the sensor's response into an enhanced electrical signal by means of amplification and may comprise multiplexer means to furnish a plurality of output signals provided by one or more sensor parts. The enhanced electrical signal is supplied to ADC 16 to generate a digital signal that in turn is fed to microprocessor 18. Microprocessor 18 carries out the calculations to determine the location of the object 26 relative to digitizer 10. Display control circuit 24 takes care of the visual representation of data received from microprocessor 18 and may perform any other visually oriented user-interface function. Accordingly, when display unit 20 comprises an LCD 22, circuit 24 controls the optical state of the crystals in array 22 in response to, for instance, stimuli provided by the user, who manipulates an object or his finger 26 near sensor 12. In addition, circuit 24 initializes the row or frame inversions. When display unit 20 comprises a CRT 22, circuit 24 controls direction and intensity of the cathode ray to create visual information on the CRT's screen (not indicated) in response to the output of sensor 12. Also, circuit 24 determines the flyback operation of the cathode ray to begin a new line or frame of the image shown.

Disabling in accordance with the invention may be accomplished in a variety of ways. For instance, the signal path from sensor 12 to the input of display control circuit 24 may be interrupted. To this end, a transmission gate 28 may be arranged in the signal path, such as between ADC 16 and microprocessor 18. Transmission gate 28 may be controlled by control circuit 24 via control connection 30 in order to interrupt a data flow into microprocessor 18. When display unit 20 comprises an LCD unit 22, interruption is accomplished during the row or frame inversion operation. On the other hand, when display unit 20 incorporates a CRT, the data flow is interrupted when the flyback pulse occurs. Since circuit 24 manages this recurrent operation (i.e.,the row or frame inversion for an LCD and the flyback for a CRT) by means of furnishing a drive signal to LCD 22 or CRT 22, information in the form of a specific internal state of, e.g., a control program register or a timer in circuit 24, is available to anticipate the occurrence of the inversion or flyback procedure. Detection of this internal state may be used to generate a control signal for control of gate 28. The drive signal itself may be used instead for control of gate 28. In this way, enabling and disabling are accomplished on the same time base as that of the drive signal.

Alternatively, the operation of one or more of parts 12-18, e.g., sensor 12 itself, ADC 16 or microprocessor 18, may be put on hold. For example, microprocessor 18 may be put into a stand-by mode, wherein previously entered data are retained but new data transmitted by ADC 16 are not accepted. This may be accomplished in response to, for instance, a control signal provided by circuit 24 to microprocessor 18 via control connection 32. The control signal may again be generated in substantially the same way as specified in the previous paragraph.

In still another approach, microprocessor 18 may be controlled by generating a flag bit in response to the control signal. The flag bit is assigned to a current data item to indicates either a valid status or an invalid status. In case of invalidity, the data are discarded, which can be accomplished in a variety of ways, e.g., by not storing the data in an output register of microprocessor 18, by substitution of dummy values or in any other software controlled manner.

Generally, any circuit of display unit 20 whose operation runs synchronous to the time basis of the row inversion or flyback operation or which is liable to emit EM noise in a predictable manner during the operation of display unit 20, can be employed in the control loop to disable digitizer 10 in a well defined manner.

Instead of using control circuit 24 to affect the signal path (between screen 12 and control circuit 24) directly, a dedicated sensor 34 may be provided for detection of EM noise and for thereupon disabling the signal propagation along the signal path. In a similar way as discussed above this may be done via connection 36 to put an element in digitizer 10, such as microprocessor 18 here, on hold, or via 38 to open or close gate 28, or to assign an invalid status to specified data.

Note that it may be advantageous to interrupt the signal propagation at a location in the signal path that is downstream as close as possible to the part of digitizer 10 that picks up the noise. This reduces the effects of propagation delay on the undesired processing of the spike along the signal path.

### Time dependencies

For the case wherein display unit 20 includes an LCD 22, Figure 2 gives an example of the time relationship between row inversion signal INV, a series SP of spikes caused by the recurrent inversion operations and picked up electro-magnetically, and an alternating sequence of time slots EN and DIS wherein the communication from digitizer 10 to LCD 22 is enabled and disabled, respectively. Note that in the illustrated example the duration of each spike is substantially shorter than the time span wherein inversion signal INV is stable, owing to the relatively large bandwidth of the system.

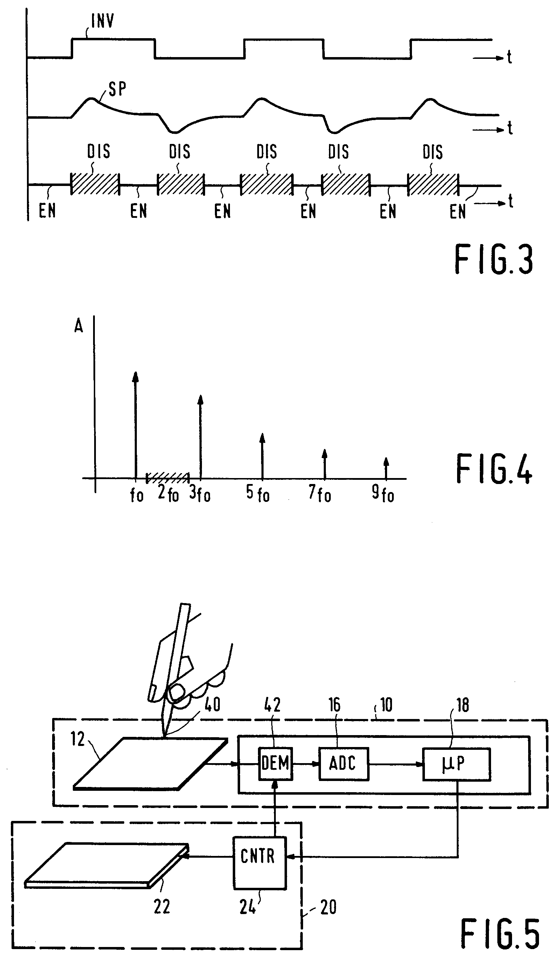

Figure 3 illustrates the case when the bandwidth of the system is of approximately the same order as the repetition frequency of the spikes. The spikes are considered to be smeared out in time, due to dispersive effects. Disabling the digitizer is to be done in those time intervals, wherein the smeared out spike has the largest amplitude.

Summarizing, the invention allows increasing the amount of interference rejection with regard to the prior art, by preventing the spikes from entering the data processing part of the system. This is accomplished by means of disabling the data processing part when the spikes occur.

### Modulation approach

In some cases, system bandwidth is necessarily small, e.g., due to sensor constraints. Interference rejection can then be achieved by modulating the sensor's information at a frequency which lies between harmonics of the EM interference.

Figure 4 illustrates a frequency band around a frequency of 2f₀ between frequencies f₀ and 3f₀ of successive harmonics in the EM noise that is reserved for modulation. Signals in this selective frequency band are not affected by the spikes that only include harmonics of frequency f₀ and its uneven multiples. A frequency band between the frequencies of another pair of successive harmonics than the ones shown may be selected instead.

Figure 5 shows an example of a data input apparatus based on the modulation approach. The parts that correspond to the ones of Figure 1 are similarly indicated by the same reference numerals and are explained above.

Sensor 12 now incorporates a graphical tablet that provides an electrical output signal indicative of the position of a stylus 40 relative to sensor 12. The cooperation of sensor 12 and stylus 40 may again be based on a variety of physical mechanisms, such as an electro-magnetic coupling (inductive, capacitive), an acoustic coupling, an optical coupling, etc. The information transfer in the tablet-stylus system now is modulated at a particular frequency. E.g., stylus 40 transmits acoustic waves to be detected by sensor 12 to locate stylus 40. Stylus 40 is provided with suitable modulation means (not shown) for generating an output signal, whose frequency spectrum lies substantially in a frequency range between successive harmonics of the EM noise generated by LCD 22.

Regardless of the physical nature of the coupling between sensor 12 and stylus 40, a modulated electrical output signal is eventually generated to be processed. The output signal is supplied to a demodulation circuit 42 for demodulating the signal. Although the EM noise from LCD 22 affects the electrical signal, the signal is recovered in demodulation circuit 42. Demodulation circuit 42 may include enhancing circuitry 14 of Figure 1. The demodulated signal thereupon is digitized by ADC 16 and conventionally processed in microprocessor 18.

Note that the modulation approach may be applied in case sensor 12 is replaced by a transmitter (not shown) for signals to be received by stylus 40 to determine the position of stylus 40 relative to the transmitter. Then, stylus 40 provides the signals to be demodulated and to be processed instead of sensor 12.

## Claims

1. An electronic apparatus comprising:
- a display means with a device that generates electro-magnetic noise during a particular time interval;
- a data processing electronic circuit for functional collaboration with the display means; and
- protection means coupled to the circuit for reducing a susceptibility of the circuit to the electromagnetic noise;
characterized in that:
- the protection means comprises disabling means for at least partially disabling the circuit in the particular time interval.

2. The apparatus of claim 1, characterized in that the disabling means comprises:
- detection means coupled to the device for anticipating emission of the noise by monitoring an operational state of the device for selectively providing a warning signal; and
- control means coupled between the detection means and the circuit for disabling the circuit in response to the warning signal.

3. The apparatus of claim 1, characterized in that the disabling means comprises control means coupled to the circuit and to the device for alternately disabling the circuit and the device.

4. The apparatus of claim 1, characterized in that the disabling means comprises status assignment means to selectively notify the circuit of a valid status or of an invalid status of input data supplied to the circuit.

5. The apparatus of claim 2, characterized in that the display comprises an LCD, and in that the detection means is coupled to a drive signal generator of the LCD.

6. The apparatus of claim 2, characterized in that the display comprises a CRT and in that the detection means is coupled to a fly back circuit of the CRT to provide a fly back pulse to control a direction of a cathode ray.

7. The apparatus of claim 1, characterized in that the display means, the data processing circuit and the protection means are physically integrated with one another to form a digitizer.
